# EUROPEAN PATENT APPLICATION

(11) **EP 3 407 550 A1**
(43) Date of publication of application: **28.11.2018**
(21) Application number: 18168684.1
(22) Date of filing: 23.04.2018
(51) Int. Cl.: H04L 12/58, H04M 1/725, G06F 17/28

(54) **METHOD FOR SENDING MESSAGES AND MOBILE TERMINAL**

(30) Priority: 26.05.2017 CN 201710384942
(71) Applicant: Guangdong Oppo Mobile Telecommunications Corp., Ltd., Dongguan, Guangdong 523860 (CN)
(72) Inventor: BAI, Jian, Chang'an Dongguan, Guangdong (CN)
(74) Representative: Johnson, Richard Alan

(57) **Abstract**

A method for sending messages and a mobile terminal are provided. The method is applicable to a mobile terminal including a processor and an AI module. The method includes the following. The mobile terminal controls the AI module to notify the processor to run a second application in the background when detecting that the number of English words in a message display window of a first chat interface of a first application is greater than a preset number threshold. The mobile terminal controls the AI module to translate a Chinese message in a message entry window of the first chat interface into an English message through the second application running in the background, when the Chinese message is detected. The mobile terminal controls the AI module to send the English message to a server when detecting a user operation for acknowledgment of the sending of the English message.

## Description

### TECHNICAL FIELD

The present disclosure relates to the field of mobile terminals, and more particularly to a method for sending messages and a mobile terminal.

### BACKGROUND

Applications installed on smart phones are widely used in all aspects of people's lives. In these applications, there are chat applications such as Instant Messenger App (e.g., WeChat®) and translation applications such as Translation Lexicon App (e.g., Youdao Dictionary®).

At present, chat applications of the smart phone generally only support an English-to-Chinese translation function. For a chat application that does not support Chinese-to-English translation function, users need to translate Chinese into English through other applications and then return to the chat application and enter in English. The operation is very cumbersome and inefficient.

### SUMMARY

A method for sending messages and a mobile terminal are provided, to improve convenience of a mobile terminal in controlling chat applications and efficiency of message processing.

According to a first aspect of the disclosure, a mobile terminal is provided. The mobile terminal includes a processor and an artificial intelligence (AI) module coupled with the processor.

The AI module is configured to notify the processor to run a second application in the background when detecting that the number of English words in a message display window of a first chat interface of a first application is greater than a preset number threshold.

The processor is configured to run the second application in the background.

The AI module is further configured to translate a Chinese message in a message entry window of the first chat interface into an English message through the second application running in the background, when the Chinese message is detected.

The AI module is further configured to send the English message to a server when detecting a user operation for acknowledgment of the sending of the English message.

According to a second aspect, there is provided a method for sending messages, which is applicable to a mobile terminal including a processor and an AI module. The method includes the following.

The AI module notifies the processor to run a second application in the background when detecting that the number of English words in a message display window of a first chat interface of a first application is greater than a preset number threshold.

The processor runs the second application in the background.

The AI module translates a Chinese message in a message entry window of the first chat interface into an English message through the second application running in the background, when the Chinese message is detected.

The AI module sends the English message to a server when detecting a user operation for acknowledgment of the sending of the English message.

According to a third aspect, a mobile terminal is provided. The mobile terminal has functions of performing operations of the mobile terminal in the foregoing method. The functions can be achieved through hardware or can also be realized through implementing corresponding software with hardware. The hardware or software may include one or more modules corresponding to the functions. In at least one implementation, the mobile terminal includes a processor and an AI module. The processor and the AI module are configured to be operable with the mobile terminal to perform the corresponding operations in the above method. In addition, the mobile terminal further includes a communication interface configured to support communication between the mobile terminal and other devices. Furthermore, the mobile terminal further includes a memory. The memory is configured to be coupled with the processor and the AI module and save program instructions and data necessary for the terminal.

According to a fourth aspect, a mobile terminal is provided. The mobile terminal includes a processor, an AI module, a memory, a communication interface, and at least one program. The at least one program is stored in the processor and is configured to be implemented by the processor and the AI module. The at least one program includes instructions for implementing steps of any method, such as the method of embodiments of the second aspect of the present disclosure.

According to a fifth aspect, there is provided a computer-readable storage medium configured to store computer programs for electronic data interchange. The computer programs are operable with a computer to perform all or part of the operations described in any method of the second aspect of the embodiments of the disclosure. The computer includes a mobile terminal.

According to a sixth aspect, there is provided a computer program product including a non-volatile computer-readable storage medium that stores computer programs. The computer programs are operable with a computer to perform all or part of the operations described in any method of the embodiments of the second aspect of the present disclosure. The computer program product can be a software installation package. The computer includes a mobile terminal.

### BRIEF DESCRIPTION OF THE DRAWINGS

To illustrate the technical solutions embodied by the embodiments of the present disclosure or by the related art more clearly, the following briefly introduces the accompanying drawings required for describing the embodiments or the related art. Apparently, the accompanying drawings in the following description merely illustrate some embodiments of the present disclosure. Those of ordinary skill in the art may also obtain other drawings based on these accompanying drawings without creative efforts.
FIG.1 is a schematic structural diagram illustrating a mobile terminal according to an embodiment of the disclosure.
FIG.2A is a schematic flow diagram illustrating a method for sending messages according to an embodiment of the disclosure.
FIG.2B is a schematic diagram illustrating a chat interface according to an embodiment of the disclosure.
FIG.3 is a schematic structural diagram illustrating a mobile terminal according to an embodiment of the disclosure.
FIG.4 is a block diagram illustrating functional units of a mobile terminal according to an embodiment of the disclosure.
FIG.5 is a schematic structural diagram illustrating another mobile terminal according to an embodiment of the disclosure.

### DETAILED DESCRIPTION OF ILLUSTRATED EMBODIMENTS

Technical solutions of the embodiments of the present disclosure will be described clearly and completely hereinafter with reference to the accompanying drawings in the embodiments of the present disclosure. Apparently, the described embodiments are merely some rather than all embodiments of the present disclosure. All other embodiments obtained by those of ordinary skill in the art based on the embodiments of the present disclosure without creative efforts shall fall within the protection scope of the present disclosure.

The terms "first", "second", "third", and "fourth" used in the specification, the claims, and the accompany drawings of the present disclosure are used for distinguishing between different objects rather than describing a particular order. The terms "include", "comprise", and "have" as well as variations thereof are intended to cover non-exclusive inclusion. For example, a process, method, system, product, or apparatus including a series of steps or units is not limited to the listed steps or units, it can optionally further include other steps or units that are not listed; alternatively, other steps or units inherent to the process, method, product, or device can be included either.

The term "embodiment" or "implementation" referred to herein means that a particular feature, structure, or characteristic described in connection with the embodiment may be contained in at least one embodiment of the present disclosure. The phrase appearing in various places in the specification does not necessarily refer to the same embodiment, nor does it refer an independent or alternative embodiment that is mutually exclusive with other embodiments. It is expressly and implicitly understood by those skilled in the art that an embodiment described herein may be combined with other embodiments.

The mobile terminal involved in the embodiments of the present disclosure may include various handheld devices having wireless communication functions, in-vehicle devices, wearable devices, computing devices, or other processing devices connected to the wireless modem, as well as various forms of user equipment (UE), mobile stations, terminal devices, and the like. For the convenience of description, the above-mentioned devices are collectively referred to as a mobile terminal.

Artificial intelligence (AI, also machine intelligence, MI) is intelligence demonstrated by machines, in contrast to the natural intelligence (NI) displayed by humans and other animals. In computer science, AI research is defined as the study of "intelligent agents": any device that perceives its environment and takes actions that maximize its chance of successfully achieving its goals. Colloquially, the term "artificial intelligence" is applied when a machine mimics "cognitive" functions that humans associate with other human minds, such as "learning" and "problem solving".

The processor described in the embodiments of the present disclosure may be an application processor. The AI module can be in the form of hardware and/or software. When the AI module has a hardware configuration, the application processor can be integrated with or separated from the AI module. The disclosure is not limited thereto.

As one example, the AI module is integrated with the application processor. When the application processor is a single core processor, the AI module can be an intelligent micro-processing circuit in the application processor. When the application processor is a multi-core processor, the AI module can be a single intelligent microprocessor core in the multi-core processor or an intelligent micro-processing circuit in one microprocessor core.

As another example, the AI module is separated from the application processor. The AI module can be an intelligent micro-processing circuit in any coprocessor (such as a baseband processor, a digital signal processor (DSP), a power management chip, etc.) other than the application processor in an application processor platform architecture. Alternatively, the AI module can be a newly-set intelligent microprocessor other than the application processor in the application processor platform architecture. Alternatively, the AI module can be a newly-set intelligent processing platform separated from an application processor platform. The intelligent processing platform at least includes one dedicated intelligent processor. The intelligent processing platform and the application processor platform are in communication connection. In at least one implementation, the intelligent processing platform and a memory, peripherals, etc. are in direct communication connection.

According to a first aspect, a mobile terminal is provides. The mobile terminal includes a processor and an artificial intelligence (AI) module coupled with the processor. The AI module is configured to notify the processor to run a second application in the background, when detecting that the number of English words in a message display window of a first chat interface of a first application is greater than a preset number threshold. The processor is configured to run the second application in the background. The AI module is further configured to translate a Chinese message in a message entry window of the first chat interface into an English message through the second application running in the background, when the Chinese message is detected. The AI module is further configured to send the English message to a server when detecting a user operation for acknowledgment of the sending of the English message.

In one implementation, the AI module configured to translate the Chinese message into the English message through the second application is configured to: acquire the English message, wherein the English message is obtained by translating the Chinese message by the second application running in the background, and switch displaying in the message entry window from the Chinese message to the English message.

In one implementation, the AI module configured to acquire the English message is configured to: invoke, in the background, the second application to translate the Chinese message into the English message and acquire the English message.

In one implementation, the AI module configured to invoke, in the background, the second application to translate the Chinese message into the English message is configured to: pop up a function button navigation bar containing a Chinese-to-English translation function button, when a first selection operation against the Chinese message is detected; invoke, in the background, the second application to translate the Chinese message into the English message, when a second selection operation against the Chinese-to-English translation function button is detected.

In one implementation, the AI module is further configured to execute the follows before detecting that the number of English words in the message display window of the first chat interface of the first application is greater than the preset number threshold: acquiring the number of English words in the message display window when detecting that a first contact corresponding to the first chat interface belongs to a preset contact set.

In one implementation, the processor is an application processor, the application processor and the AI module are arranged in a general-purpose processor, and the AI module is integrated into or separated from the application processor.

According to a second aspect, there is provided a method for sending messages. The method is applicable to a mobile terminal having a processor and an AI module. The method includes: notifying, by the AI module, the processor to run a second application in the background when detecting that the number of English words in a message display window of a first chat interface of a first application is greater than a preset number threshold; running in the background the second application, by the processor; translating, by the AI module, a Chinese message in a message entry window of the first chat interface into an English message through the second application running in the background, when the Chinese message is detected; sending, by the AI module, the English message to a server when detecting a user operation for acknowledgment of the sending of the English message.

In one implementation, the translating, by the AI module, a Chinese message in a message entry window of the first chat interface into an English message through the second application includes: acquiring, by the AI module, the English message, wherein the English message is obtained by translating the Chinese message by the second application running in the background; switching, by the AI module, displaying in the message entry window from the Chinese message to the English message.

In one implementation, the acquiring, by the AI module, an English message includes: invoking, by the AI module, in the background the second application to translate the Chinese message into the English message and acquiring the English message.

In one implementation, the invoking, by the AI module, in the background the second application to translate the Chinese message into the English message includes: popping up, by the AI module, a function button navigation bar containing a Chinese-to-English translation function button when a first selection operation against the Chinese message is detected; invoking, by the AI module, in the background the second application to translate the Chinese message into the English message when a second selection operation against the Chinese-to-English translation function button is detected.

In one implementation, the method further comprises the follows before detecting, by the AI module under control of mobile terminal, that the number of English words in the message display window of the first chat interface of the first application is greater than the preset number threshold: acquiring, by the AI module under control of the mobile terminal, the number of English words in the message display window when detecting that a first contact corresponding to the first chat interface belongs to a preset contact set.

According to a third aspect, a non-volatile computer-readable storage medium is provided. The non-volatile computer-readable storage medium is configured to store computer programs for electronic data interchange. The computer programs are operable with a computer to perform the follows: determining the number of words in a first language in a message display window of a first chat interface of a first application; running a second application in the background based on a determination that the number determined is greater than a preset number threshold; translating a second message in a second language in a message entry window of the first chat interface into a first message in the first language through the second application running in the background, when the second message is detected; sending the first message to a server when detecting a user operation for acknowledgment of the sending of the first message.

In one implementation, the translating a second message in a second language in a message entry window of the first chat interface into a first message in the first language includes: reading the second message in the message entry window via the second application; translating the second message into the first message via the second application; providing the first message to the first application, so as to switch displaying in the message entry window from the second message to the first message.

In one implementation, the first chat interface is a private chat interface, the computer programs are further operable with the computer to perform the follows prior to the determining the number of words in a first language: determining whether a contact corresponding to the first chat interface belongs to a preset contact set; proceeding to the determining based on a determination that the contact corresponding to the first chat interface belongs to the preset contact set.

In one implementation, the first chat interface is a group chat interface, the computer programs are further operable with the computer to perform the follows prior to the determining the number of words in a first language: determining whether at least one contact corresponding to the first chat interface belongs to a preset contact set; proceeding to the determining based on a determination that at least one contact corresponding to the first chat interface belongs to the preset contact set.

In one implementation, the computer programs are further operable with the computer to perform the follows prior to the translating: popping up a function button navigation bar containing a second language-to-first language translation function button; invoking in the background the second application to translate the second message into the first message in response to a selection operation against the second language-to-first language translation function button.

In one implementation, the computer programs are further operable with the computer to perform the follows prior to the popping up a function button navigation bar: receiving a triggering operation against the second message from a user.

Embodiments of the present disclosure will be described in detail below with reference to the accompanying drawings. In the following, Chinese-to-English translation is described as an example. Obviously, the present disclosure is not limited thereto; technical schemes of the present disclosure can be applied to scenes involving any translation from a first language to a second language different from the first language. Technical features of embodiments of can be combined or substituted without conflicts. For example, the mobile terminal can be used to implement the method; for details not illustrated in the mobile terminal, reference can be made to the method and vice versa.

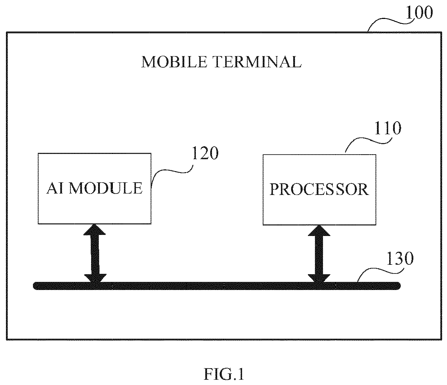

FIG.1 is a schematic structural diagram illustrating a mobile terminal 100 according to an embodiment of the disclosure. The mobile terminal 100 includes a processor 110, an artificial intelligence (AI) module 120, and a bus 130. The processor 110 is coupled with the AI module 120 through the bus 130.

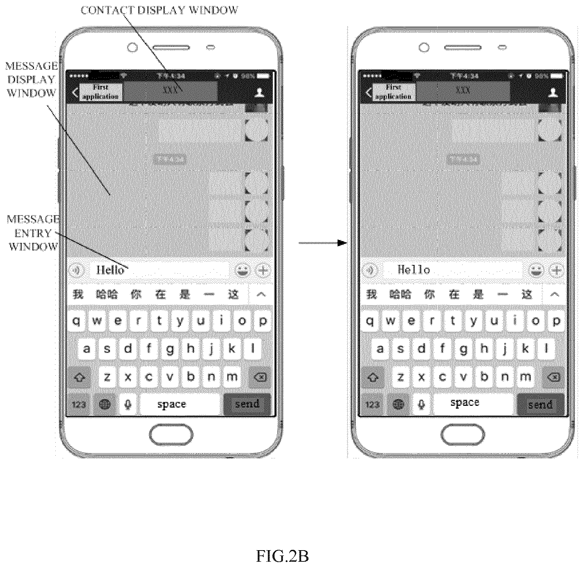

The AI module 120 is configured to notify the processor 110 to run a second application in the background, when detecting that the number of English words in a message display window (for example, the message display window illustrated in FIG.2B) of a first chat interface of a first application is greater than a preset number threshold.

The processor 110 is configured to run the second application in the background.

The AI module 120 is further configured to translate a Chinese message in a message entry window (for example, the message entry window illustrated in FIG.2B) of the first chat interface into an English message through the second application running in the background, when the Chinese message is detected. The first chat interface can be a private chat interface or a group chat interface.

The AI module 120 is further configured to send the English message to a server when detecting a user operation for acknowledgment of the sending of the English message. Mobile terminals can communicate with each other via the server. With regarding to the acknowledgment of the sending of the English message, it refers to a click operation on the "Send" button of FIG.2B for example.

In this embodiment, when detecting that the number of English words in the message display window of the first chat interface of the first application is greater than the preset number threshold, the mobile terminal first runs the second application in the background. Then when the Chinese message in the message entry window of the first chat interface is detected, the mobile terminal translates the Chinese message into the English message through the second application running in the background. Finally, when detecting the user operation for acknowledgment of the sending of the English message, the mobile terminal sends the English message to the server. Since the second application running in the background can directly translate the Chinese message in the message entry window into the English message, the mobile terminal can conveniently send the English message as a chat message to the server for English message chatting. In this way, there is no need to perform other lengthy operations, such as exiting a current chat interface to enable a translation application to obtain translation results, returning to the current chat interface, and entering the translation results, it is possible to improve the convenience of the mobile terminal in controlling applications and the efficiency of message processing.

In at least one implementation, the AI module 130 configured to translate the Chinese message into the English message through the second application is configured to: acquire the English message, where the English message is obtained by translating the Chinese message by the second application running in the background; switch displaying in the message entry window from the Chinese message to the English message.

In this implementation, the mobile terminal can directly acquire the English message through the AI module, where the English message is obtained by translating the Chinese message by the second application running in the background, and display the English message in the message entry window of the current chat interface. As a result, there is no need to switch the current chat interface to a translation function interface of the second application, which can improve convenience and efficiency of the mobile terminal in controlling the first application to achieve Chinese-to-English translation function.

In one implementation, the AI module configured to acquire the English message is configured to invoke in the background the second application to translate the Chinese message into the English message and acquire the English message.

In this implementation, the mobile terminal controls the AI module to invoke the second application in the background to translate the Chinese message into the English message and therefore, translation function can be achieved without relying on the user's operation. Furthermore, for the user, once Chinese is entered in the message entry window, the mobile terminal will translate the Chinese entered into corresponding English intelligently and automatically. In this way, it is possible to improve intelligence of the mobile terminal in controlling applications.

In one implementation, the AI module configured to invoke in the background the second application to translate the Chinese message into the English message is configured to pop up a function button navigation bar containing a Chinese-to-English translation function button when a first selection operation against the Chinese message is detected, and invoke in the background the second application to translate the Chinese message into the English message when a second selection operation against the Chinese-to-English translation function button is detected. The first selection operation can be a touch operation on or around the Chinese message, a selection operation or a click operation against the Chinese message, or any other operation that can trigger the popping up of the navigation bar. The present disclosure is not limited thereto. The second selection operation can be a click operation for example.

In this implementation, the mobile terminal gradually confirms the intention of the user to translate the Chinese message through two user interaction operations, a situation where the mobile terminal translates a Chinese message while the user does not want such translation can be avoided. As a consequence, accuracy of the mobile terminal in controlling the translation function of the first application can be improved.

In one implementation, the AI module is further configured to acquire the number of English words in the message display window when detecting that a first contact corresponding to the first chat interface is a contact belonging to a preset contact set, before detecting that the number of English words in the message display window of the first chat interface of the first application is greater than the preset number threshold. The preset contact set can be set in advance by the user. For example, the preset contact set may include foreigner contacts, business contacts that need to chat in English, and the like.

In this implementation, the mobile terminal controls the AI module to trigger the operation of acquiring the number of English words in the message display window when detecting that the first contact corresponding to the first chat interface belongs to the preset contact set, in this way, it is possible to avoid consuming additional processing resources to provide translation function against a chat interface of a contact that does not belong to the contact set, therefore improving resource utilization of the first application. In case of private chat interface, the first contact refers to the unique contact corresponding to the current chat interface. In case of group chat interface, the first contact refers to one or more contacts among the group contacts corresponding to the current chat interface.

In one implementation, the AI module is further configured to not perform the operation of acquiring the number of English words in the message display window when detecting that a second contact corresponding to a second chat interface is not a contact belonging to the preset contact set, after sending the English message to the server.

In this implementation, the mobile terminal will not perform the operation of acquiring the number of English words against the second chat interface of the second contact that does not belong to the contact set, processing resources can be allocated rationally and resource utilization of the first application can be improved.

In one implementation, the AI module is further configured to display the English message in the message display window when detecting the user operation for acknowledgment of the sending of the English message.

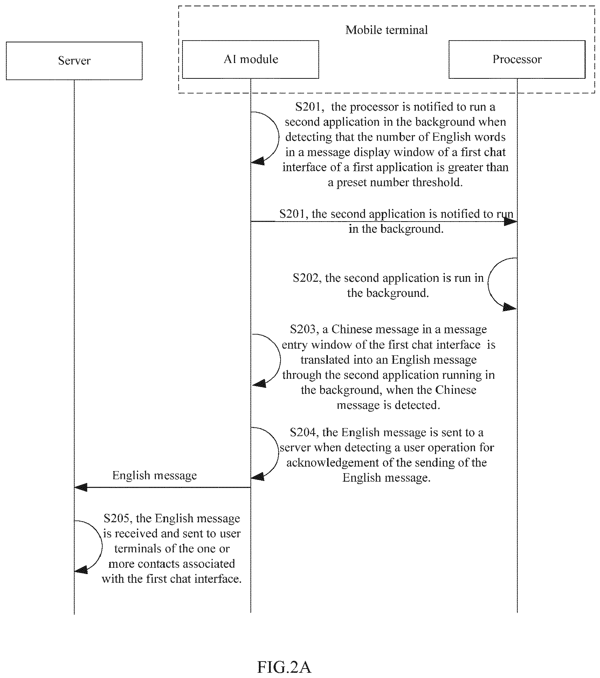

Based on the embodiments of FIG.1, FIG.2A is a schematic flow diagram illustrating a method for sending messages according to an embodiment of the disclosure. The method is applicable to a mobile terminal including a processor and an AI module coupled with the processor. As illustrated in the FIG.2A, the method for sending messages begins at S201.

At S201, the mobile terminal controls the AI module to notify the processor to run a second application in the background when detecting that the number of English words in a message display window of a first chat interface of a first application is greater than a preset number threshold.

The first application can be a chat application such as an Instant Messenger App (e.g., WeChat®, QQ®), or the like.

At S202, the mobile terminal controls the processor to run the second application in the background.

The second application can be a translation application such as Translation Lexicon App, and the like.

At S203, the mobile terminal controls the AI module to translate a Chinese message in a message entry window of the first chat interface into an English message through the second application running in the background, when the Chinese message is detected.

The Chinese message may at least include one Chinese word and the English message may at least include one English word.

As illustrated in FIG.2B, the first chat interface may include a message display window and a message entry window. The first chat interface may further include a contact display window. When a user enters a Chinese message "hello" through the message entry window, the mobile terminal controls the AI module to translate the Chinese message "hello" into an English message "hello" through the second application running in the background.

At S204, the mobile terminal controls the AI module to send the English message to a server when detecting a user operation for acknowledgement of the sending of the English message.

The server is configured to forward the English message to user terminals of one or more contacts associated with the first chat interface, such that chat message interaction can be achieved.

At S205, the server receives the English message and forwards the English message to the user terminals of the one or more contacts associated with the first chat interface.

In this implementation, the mobile terminal first runs the second application in the background when detecting that the number of English words in the message display window of the first chat interface of the first application is greater than the preset number threshold. Then when the Chinese message in the message entry window of the first chat interface is detected, the mobile terminal translates the Chinese message into the English message through the second application running in the background. At last, when detecting that the user confirms to send the English message, the mobile terminal sends the English message to the server. The second application running in the background can directly translate the Chinese message in the message entry window into the English message, so that the mobile terminal can conveniently send the English message as a chat message to the server to achieve English chatting. In this way, there is no need to perform other lengthy operations, such as exiting a current chat interface to enable a translation application to obtain translation results, returning to the current chat interface, and entering the translation results, and as a result, convenience of the mobile terminal in controlling applications and efficiency of message processing can be improved.

In one implementation, the mobile terminal controls the AI module to translate the Chinese message into the English message through the second application as follows. The mobile terminal controls the AI module to acquire the English message, where the English message is obtained by translating the Chinese message by the second application running in the background, and switch displaying in the message entry window from the Chinese message to the English message.

In this implementation, since the AI module can directly acquire, under control of the mobile terminal, the English message obtained by translating the Chinese message through the second application running in the background, and display the English message in the message entry window of the current chat interface, there is no need to switch the current chat interface to a translation function interface of the second application, therefore improving convenience and efficiency of the mobile terminal in controlling the first application to achieve Chinese-to-English translation function.

In one implementation, the mobile terminal controls the AI module to acquire the English message obtained by translating the Chinese message by the second application running in the background as follows. The mobile terminal controls the AI module to invoke the second application in the background to translate the Chinese message into the English message and acquire the English message.

In this implementation, the mobile terminal controls the AI module to invoke the second application in the background to translate the Chinese message into the English message; therefore, the translation function can be realized without relying on the user's operation. Furthermore, for the user, once Chinese is entered in the message entry window, the mobile terminal will translate the Chinese entered into corresponding English intelligently and automatically, thereby improving intelligence of the mobile terminal in controlling applications.

In one implementation, the mobile terminal controls the AI module to invoke the second application in the background to translate the Chinese message into the English message as follows. The mobile terminal controls the AI module to pop up a function button navigation bar containing a Chinese-to-English translation function button, when a first selection operation against the Chinese message is detected, and invoke the second application in the background to translate the Chinese message into the English message, when a second selection operation against the Chinese-to-English translation function button is detected.

In this implementation, through two user interaction operations, the mobile terminal gradually confirms the intention of the user to translate the Chinese message, a situation where the mobile terminal translates a Chinese message while the user does not want such translation can be avoided. As a consequence, accuracy of the mobile terminal in controlling the translation function of the first application can be improved.

In one implementation, the method further includes the follows before detecting that the number of English words in the message display window of the first chat interface of the first application is greater than the preset number threshold. The mobile terminal controls the AI module to acquire the number of English words in the message display window when detecting that a first contact corresponding to the first chat interface is a contact belonging to a preset contact set.

In this implementation, the mobile terminal controls the AI module to trigger the acquisition of the number of English words in the message display window when detecting that the first contact corresponding to the first chat interface belongs to the preset contact set, in this way, it is possible to avoid consuming additional processing resources to provide translation function against a chat interface of a contact that does not belong to the contact set, therefore improving resource utilization of the first application.

In one implementation, the method further includes the following when detecting the user operation for acknowledgement of the sending of the English message. The mobile terminal controls the AI module to display the English message in the message display window.

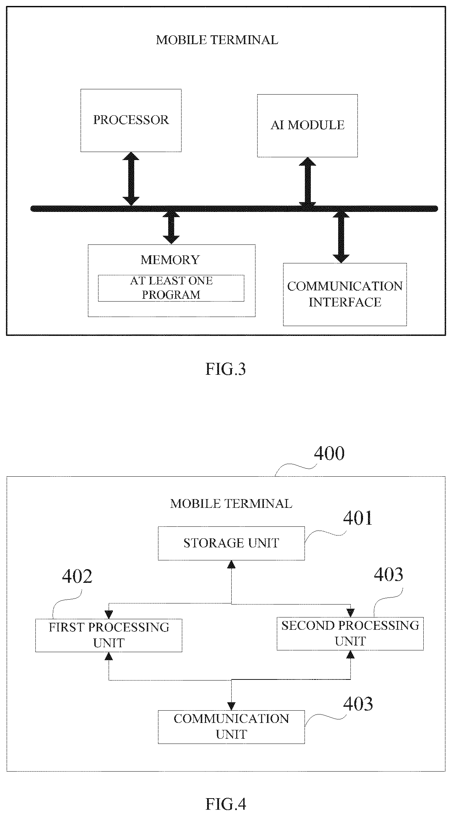

Based on the embodiments illustrated in FIG.2A, FIG.3 is a schematic structural diagram illustrating a mobile terminal according to an embodiment of the disclosure. As illustrated in FIG.3, the mobile terminal includes a processor, an AI module, a memory, a communication interface, and at least one program. The at least one program is stored in the memory and configured to be performed by the processor and the AI module. The at least one program includes instructions for performing the following operations.

The AI module is controlled to notify the processor to run a second application in the background, when detecting that the number of English words in a message display window of a first chat interface of a first application is greater than a preset number threshold.

The processor is controlled to run the second application in the background.

The AI module is controlled to translate a Chinese message in a message entry window of the first chat interface into an English message through the second application running in the background, when the Chinese message is detected.

The AI module is controlled to send the English message to a server when detecting a user operation for acknowledgment of the sending of the English message.

In this implementation, when detecting that the number of English words in the message display window of the first chat interface of the first application is greater than the preset number threshold, the mobile terminal first runs the second application in the background. When detecting the Chinese message in the message entry window of the first chat interface, the mobile terminal translates the Chinese message into the English message through the second application running in the background. In the end, when detecting the user operation for acknowledgment of the sending of the English message, the mobile terminal sends the English message to the server. Since the second application running in the background can translate the Chinese message in the message entry window into the English message directly, the mobile terminal can conveniently send the English message as a chat message to the server to achieve English chatting. In this way, there is no need to perform some lengthy operations such as exiting a current chat interface, enabling a translation application to acquire translation results, returning to the current chat interface, entering the translation results, and the like. Therefore, convenience of the mobile terminal in controlling applications and efficiency of message processing can be improved.

In at least one implementation, the instructions of the at least one program configured to control the AI module to translate the Chinese message into the English message through the second application are configured to: control the AI module to acquire the English message, where the English message is obtained by translating the Chinese message by the second application running in the background; switch displaying in the message entry window from the Chinese message to the English message.

In one implementation, the instructions of the at least one program configured to control the AI module to acquire the English message which is obtained by translating the Chinese message by the second application running in the background are configured to invoke in the background the second application to translate the Chinese message into the English message and acquire the English message.

In one implementation, the instructions of the at least one program configured to control the AI module to invoke in the background the second application to translate the Chinese message into the English message are configured to: pop up a function button navigation bar containing a Chinese-to-English translation function button, when a first selection operation against the Chinese message is detected; invoke in the background the second application to translate the Chinese message into the English message, when a second selection operation against the Chinese-to-English translation function button is detected.

In one implementation, the at least one program further includes instructions for performing the following operations. Before detecting that the number of English words in the message display window of the first chat interface of the first application is greater than the preset number threshold, the AI module is controlled to acquire the number of the English words in the message display window when detecting that a first contact corresponding to the first chat interface is a contact belonging to a preset contact set.

The foregoing technical solutions according to embodiments of the present disclosure are mainly described from the perspective of execution of the method. It can be understood that, in order to implement the above functions, the mobile terminal includes hardware structures and/or software modules corresponding to the respective functions. Those skilled in the art should readily recognize that, in combination with the exemplary units and scheme steps or operations described in the embodiments provided herein, the present disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the present disclosure.

According to the embodiments of the present disclosure, functional units may be divided for the mobile terminal according to the foregoing method examples. For example, functional units may be divided according to corresponding functions and two or more functions may be integrated into one processing unit. The above-mentioned integrated unit can be implemented in the form of hardware or software functional units. It should be noted that the division of units in the embodiments of the present disclosure is schematic and is merely a logical function division; there may be other division modes in actual implementations.

When integrated units are adopted, FIG.4 is a block diagram illustrating functional units of a mobile terminal according to an embodiment of the disclosure. A mobile terminal 400 includes a first processing unit 402, a second processing unit 403, and a communication unit 404. The first processing unit 402 and the second processing unit 403 are configured to control and manage actions of the mobile terminal. For example, the first processing unit 402 is configured to be operable in the mobile terminal to perform operations at S201-S204 illustrated in FIG.2A and/or configured to perform other processes of the technical solutions described herein. The communication unit 404 is configured to support the communication between the mobile terminal and other devices or the communication between the first processing unit 402 or the second processing unit 403 and peripherals (e.g., a camera device, a fingerprint identification device, etc.) of the mobile terminal. The mobile terminal further includes a storage unit 401 configured to store program codes and data of the mobile terminal.

The first processing unit 402 is configured to notify the second processing unit 403 to run a second application in the background when detecting that the number of English words in a message display window of a first chat interface of a first application is greater than a preset number threshold.

The second processing unit 403 is configured to run the second application in the background.

The first processing unit 402 is further configured to translate a Chinese message in a message entry window of the first chat interface into an English message through the second application running in the background when the Chinese message is detected, and send the English message to a server when detecting a user operation for acknowledgment of the sending of the English message.

In one implementation, the first processing unit 402 configured to translate the Chinese message into the English message through the second application is configured to acquire the English message where the English message is obtained by translating the Chinese message by the second application running in the background, and switch displaying in the message entry window from the Chinese message to the English message.

In one implementation, the first processing unit 402 configured to acquire the English message is configured to invoke the second application in the background to translate the Chinese message into the English message and acquire the English message.

In one implementation, the first processing unit 402 configured to invoke the second application in the background to translate the Chinese message into the English message is configured to pop up a function button navigation bar containing a Chinese-to-English translation function button when a first selection operation against the Chinese message is detected, and invoke in the background the second application to translate the Chinese message into the English message when a second selection operation against the Chinese-to-English translation function button is detected.

In one implementation, the first processing unit 402 is further configured to acquire the number of the English words in the message display window when detecting that a first contact corresponding to the first chat interface is a contact belonging to a preset contact set, before detecting that the number of English words in the message display window of the first chat interface of the first application is greater than the preset number threshold.

In one implementation, the first processing unit 402 can be an AI module and the second processing unit 403 can be a processor or a controller. The AI module and the processor can be, for example, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. Various exemplary logical blocks, modules, and circuits described in conjunction with the disclosure may be achieved or implemented. The processor and the AI module can be a combination of computing functions, for example, a combination of one or more microprocessors, a combination of the DSP and a microprocessor, and the like. The communication unit 404 can be a transceiver, a transceiver circuit, an internal communication interface (a communication port between a processor and a peripheral), and the like. The storage unit 401 can be a memory.

According to implementations of the disclosure, there is provided another mobile terminal, which includes a general-purpose processor. The general-purpose processor is configured to run a second application in the background when detecting that the number of English words in a message display window of a first chat interface of a first application is greater than a preset number threshold, translate a Chinese message in a message entry window of the first chat interface into an English message through the second application running in the background when the Chinese message is detected, and send the English message to a server when detecting a user operation for acknowledgment of the sending of the English message.

The general-purpose processor can be a processing chip capable of processing data.

In this implementation, since the second application running in the background can translate the Chinese message in the message entry window into the English message directly, the mobile terminal can conveniently send the English message as a chat message to a server to achieve English chatting. As a consequence, there is no need to perform some lengthy operations such as exiting a current chat interface, enabling a translation application to acquire translation results, returning to the current chat interface, and entering translation results. Therefore, convenience of the mobile terminal in controlling applications and the efficiency of message processing can be improved.

In one implementation, the general-purpose processor configured to translate the Chinese message into the English message through the second application is configured to: acquire the English message which is obtained by translating the Chinese message by the second application running in the background, and switch displaying in the message entry window from the Chinese message to the English message.

In one implementation, the general-purpose processor configured to acquire the English message which is obtained by translating the Chinese message by the second application running in the background is configured to: invoke the second application in the background to translate the Chinese message into the English message, and acquire the English message.

In one implementation, the general-purpose processor configured to invoke the second application in the background to translate the Chinese message into the English message is configured to: pop up a function button navigation bar containing a Chinese-to-English translation function button when a first selection operation against the Chinese message is detected, and invoke the second application in the background to translate the Chinese message into the English message when a second selection operation against the Chinese-to-English translation function button is detected.

In one implementation, the general-purpose processor is further configured to acquire the number of the English words in the message display window when detecting that a first contact corresponding to the first chat interface is a contact belonging to a preset contact set, before detecting that the number of English words in the message display window of the first chat interface of the first application is greater than the preset number threshold.

In one implementation, the general-purpose processor includes an application processor and an AI module. The AI module is integrated into the application processor and configured to perform any step that the general-purpose processor is operable to execute.

In one implementation, the general-purpose processor includes an application processor and an AI module. The AI module is separated from the application processor and configured to perform any step that the general-purpose processor is operable to execute.

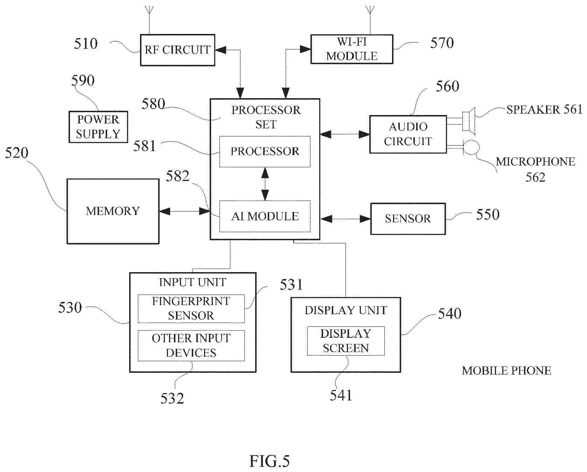

An embodiment of the present disclosure further provides another mobile terminal. As illustrated in FIG.5, only parts related to the embodiment of the disclosure are illustrated for the convenience of description. For technical details not described, reference may be made to the method embodiments of the present disclosure. The mobile terminal may be any terminal device, such as a mobile phone, a tablet computer, a personal digital assistant (PDA), a point of sale terminal (POS), an on-board computer, and the like. The following describes the mobile phone as an example of the mobile terminal.

FIG.5 is a block diagram of a part of a structure of a mobile phone related to a mobile terminal according to an embodiment of the disclosure. Referring to FIG.5, the mobile phone includes a RF (radio frequency) circuit 510, a memory 520, an input unit 530, a display unit 540, a sensor 550, an audio circuit 560, a Wi-Fi (wireless fidelity) module 570, a processor set 580, and a power supply 590 and other components. Those skilled in the art can understand that the structure of the mobile phone illustrated in FIG.5 does not constitute any limitation on a mobile phone. The mobile phone configured to implement technical solutions of the disclosure may include more or fewer components than illustrated, or may combine certain components or different components.

In the following, various components of the mobile phone will be described in detail with reference to FIG.5.

The processor set 580 is a control center of the mobile phone and includes a processor 581 and an artificial intelligence (AI) module 582 coupled with the processor 581. The processor 581 and the AI module 582 connect various parts of the entire mobile phone through various interfaces and lines. By running or executing software programs and/or modules stored in the memory 520 and calling data stored in the memory 520, the processor 581 and the AI module 582 can execute various functions of the mobile phone and conduct data processing, so as to monitor the mobile phone as a whole. The processor 581 and the AI module 582 are configured to execute the following operations.

The AI module 582 is configured to notify the processor 581 to run a second application when detecting that the number of English words in a message display window of a first chat interface of a first application is greater than a preset number threshold. The processor 581 is configured to run the second application in the background. The AI module 582 is further configured to translate a Chinese message in a message entry window of the first chat interface into an English message through the second application running in the background, when the Chinese message is detected. The AI module 582 is further configured to send the English message to a server when detecting a user operation for acknowledgment of the sending of the English message.

In at least one implementation, the processor 581 and the AI module 582 may include one or more processing units. The processor 581 may be integrated with an application processor and a modem processor, where the application processor is mainly configured to handle an operating system, a user interface, applications, and so on. The modem processor is mainly configured to deal with wireless communication. It will be appreciated that the modem processor mentioned above may not be integrated into the processor 581.

The RF circuit 510 is configured to receive or transmit information. Generally, the RF circuit 510 includes but is not limited to an antenna, at least one amplifier, a transceiver, a coupler, a low noise amplifier (LNA), a duplexer and the like. In addition, the RF circuit 510 may also communicate with the network and other devices via wireless communication. The above wireless communication may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS) and so on.

The memory 520 is configured to store software programs and modules. The processor 581 and the AI module 582 are configured to execute various function applications and data processing of the mobile phone by running the software programs and the modules stored in the memory 520. The memory 520 mainly includes a program storage area and a data storage area. The program storage area may store an operating system, applications required for at least one function and so on. The data storage area may store data (such as usage parameters of an application) created according to use of the mobile phone, and so on. In addition, the memory 520 may include a high-speed RAM, and may further include a non-volatile memory such as at least one disk storage device, a flash device, or other non-volatile solid storage devices.

The input unit 530 may be configured to receive input digital or character information and generate key signal input associated with user setting and function control of the mobile phone. As one implementation, the input unit 530 may include a fingerprint sensor 531 and other input devices 532. The fingerprint sensor 531 can collect fingerprint data of the user. In addition to the fingerprint sensor 531, the input unit 530 may further include the other input devices 532. As one implementation, the other input devices 532 may include, but not limit to, one or more of a touch screen, a physical keyboard, a function key (such as a volume control key, a switch key, etc.), a trackball, a mouse, a joystick and the like.

The display unit 540 is configured to display information input by the user or information provided for the user or various menus of the mobile phone. The display unit 540 may include a display screen 541. Alternatively, the display screen 541 may be in the form of a liquid crystal display (LCD), an organic light-emitting diode (OLED) and so on. Although the fingerprint sensor 531 and the display screen 541 are illustrated as two separate components in FIG.5 to realize the input and output functions of the mobile phone, in some embodiments, the fingerprint sensor 531 may be integrated with the display screen 541 to implement the input and output functions of the mobile phone.

The mobile phone may also include at least one sensor 550, such as a light sensor, a motion sensor, and other sensors. As one implementation, the light sensor may include an ambient light sensor and a proximity sensor, among which the ambient light sensor may adjust the brightness of the display screen 541 according to ambient lights. The proximity sensor may turn off the display screen 541 and/or backlight when the mobile phone reaches nearby the ear. As a kind of motion sensor, a accelerometer sensor can detect the magnitude of acceleration in all directions (typically three axes) and when the mobile phone is stationary, the accelerometer sensor can detect the magnitude and direction of gravity; the accelerometer sensor can also identify mobile-phone gestures related the applications (such as vertical and horizontal screen switch, related games, magnetometer attitude calibration), or the accelerometer sensor can be used for vibration-recognition related functions (such as a pedometer, percussion) and so on. The mobile phone can also be equipped with a gyroscope, a barometer, a hygrometer, a thermometer, and an infrared sensor and other sensors, and it will not be repeated herein.

The audio circuit 560, a speaker 561, a microphone 562 may provide an audio interface between the user and the mobile phone. The audio circuit 560 may convert the received audio data into electrical signals and transfer the electrical signals to the speaker 561; thereafter the speaker 561 converts the electrical signals into sound signals to output. On the other hand, the microphone 562 converts the received sound signals into electrical signals, which will be received and converted into audio data by the audio circuit 560 to output. The audio data is then processed and transmitted by the processor 581 via a RF circuit 510 to another mobile phone for example, or, the audio data is output to the memory 520 for further processing.

Wi-Fi belongs to a short-range wireless transmission technology. With aid of the Wi-Fi module 570, the mobile phone may assist the user in E-mail receiving and sending, webpage browsing, access to streaming media and the like. Wi-Fi provides users with wireless broadband Internet access. Although the Wi-Fi module 570 is illustrated in FIG.5, it should be understood that the Wi-Fi module 570 is not essential to the mobile phone and can be omitted according to actual needs without departing from the essential nature of the present disclosure.

The mobile phone also includes a power supply 590 (e.g., a battery) that supplies power to various components. For instance, the power supply 590 may be logically connected to the processor set 580 via a power management system to enable management of charging, discharging, and power consumption through the power management system.

Although not illustrated, the mobile phone may include a camera, a Bluetooth module, etc., and the disclosure will not elaborate herein.

The method of the foregoing embodiments illustrated in FIG.2A can be realized based on the structure of the mobile phone.

The functions of the units illustrated in FIG.4 can be achieved based on the structure of the mobile phone.

Embodiments of the present disclosure also provide a computer storage medium. The computer storage medium stores computer programs for electronic data interchange which, when executed, being operable with a computer to accomplish all or part of the operations of any of the methods described in the above-described method embodiment. The computer can be a mobile terminal or other equipment.

Embodiments of the present disclosure also provide a computer program product. The computer program product includes a non-transitory computer-readable storage medium storing computer programs. The computer programs are operable with a computer to perform all or part of the operations of any of the methods described in the above method embodiments. The computer program product may be a software installation package. The computer can be a mobile terminal or other equipment.

It is to be noted that, for the sake of simplicity, the foregoing method embodiments are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the embodiments described in the specification are exemplary embodiments and the actions and modules involved are not necessarily essential to the present disclosure.

In the foregoing embodiments, the description of each embodiment has its own emphasis. For the parts not described in detail in one embodiment, reference may be made to related descriptions in other embodiments.

In the embodiments of the disclosure, it should be understood that, the apparatus disclosed in embodiments provided herein may be implemented in other manners. For example, the device/apparatus embodiments described above are merely illustrative; for instance, the division of the unit is only a logical function division and there can be other manners of division during actual implementations, for example, multiple units or components may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection, mechanical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the embodiments.

In addition, the functional units in various embodiments of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various embodiments of the present disclosure. The memory includes various medium capable of storing program codes, such as a USB (universal serial bus) flash disk, a read-only memory (ROM), a random access memory (RAM), a removable hard disk, Disk, compact disc (CD), or the like.

It will be understood by those of ordinary skill in the art that all or a part of the various methods of the embodiments described above may be accomplished by means of a program to instruct associated hardware, the program may be stored in a computer-readable memory, which may include a flash memory, a read-only memory (ROM), a random-access memory (RAM), a disk or a compact disc (CD), and so on.

While the present disclosure has been described in detail above with reference to the exemplary embodiments, the scope of the present disclosure is not limited thereto. As will occur to those skilled in the art, the present disclosure is susceptible to various modifications and changes without departing from the spirit and principle of the present disclosure. Therefore, the scope of the present disclosure should be determined by the scope of the claims.

## Claims

1. A mobile terminal (100), comprising:
a processor (110); and
an artificial intelligence (AI) module (120) coupled with the processor;
the AI module being configured to notify the processor to run a second application in the background, when detecting that the number of English words in a message display window of a first chat interface of a first application is greater than a preset number threshold;
the processor being configured to run the second application in the background;
the AI module being further configured to translate a Chinese message in a message entry window of the first chat interface into an English message through the second application running in the background, when the Chinese message is detected; and
the AI module being further configured to send the English message to a server when detecting a user operation for acknowledgment of the sending of the English message.

2. The mobile terminal of claim 1, wherein the AI module configured to translate the Chinese message into the English message through the second application is configured to:
acquire the English message, wherein the English message is obtained by translating the Chinese message by the second application running in the background; and
switch displaying in the message entry window from the Chinese message to the English message.

3. The mobile terminal of claim 2, wherein the AI module configured to acquire the English message is configured to:
pop up a function button navigation bar containing a Chinese-to-English translation function button, when a first selection operation against the Chinese message is detected; and
invoke, in the background, the second application to translate the Chinese message into the English message, when a second selection operation against the Chinese-to-English translation function button is detected.

4. The mobile terminal of claim 3, wherein the AI module is further configured to display the English message in the message display window when detecting the user operation for acknowledgment of the sending of the English message.

5. The mobile terminal of any of claims 1-4, wherein the AI module is further configured to execute the follows before detecting that the number of English words in the message display window of the first chat interface of the first application is greater than the preset number threshold:
acquiring the number of English words in the message display window when detecting that a first contact corresponding to the first chat interface belongs to a preset contact set.

6. The mobile terminal of claim 5, wherein the AI module is further configured to skip the acquiring the number of English words in the message display window when detecting that a second contact corresponding to a second chat interface is not a contact belonging to the preset contact set, after sending the English message to the server.

7. The mobile terminal of any of claims 1-6, wherein the processor is an application processor, the application processor and the AI module are arranged in a general-purpose processor, and the AI module is integrated into or separated from the application processor.

8. A method for sending messages, being applicable to a mobile terminal comprising a processor and an AI module, wherein the method comprises:
notifying (S201), by the AI module, the processor to run a second application in the background when detecting that the number of English words in a message display window of a first chat interface of a first application is greater than a preset number threshold;
running (S202) in the background the second application, by the processor;
translating (S203), by the AI module, a Chinese message in a message entry window of the first chat interface into an English message through the second application running in the background, when the Chinese message is detected; and
sending (S204), by the AI module, the English message to a server when detecting a user operation for acknowledgment of the sending of the English message.

9. The method of claim 8, wherein the translating, by the AI module, a Chinese message in a message entry window of the first chat interface into an English message through the second application comprises:
acquiring, by the AI module, the English message, wherein the English message is obtained by translating the Chinese message by the second application running in the background; and
switching, by the AI module, displaying in the message entry window from the Chinese message to the English message.

10. The method of claim 9, wherein the acquiring, by the AI module, an English message comprises:
popping up, by the AI module, a function button navigation bar containing a Chinese-to-English translation function button when a first selection operation against the Chinese message is detected; and
invoking, by the AI module, in the background the second application to translate the Chinese message into the English message when a second selection operation against the Chinese-to-English translation function button is detected.

11. The method of claim 10, wherein method further comprises:
displaying the English message in the message display window when detecting the user operation for acknowledgment of the sending of the English message.

12. The method of any of claims 8-11, wherein the method further comprises the follows before detecting, by the AI module under control of mobile terminal, that the number of English words in the message display window of the first chat interface of the first application is greater than the preset number threshold:
acquiring, by the AI module under control of the mobile terminal, the number of English words in the message display window when detecting that a first contact corresponding to the first chat interface belongs to a preset contact set.

13. The method of claim 12, further comprising:
skipping the acquiring the number of English words in the message display window when detecting that a second contact corresponding to a second chat interface is not a contact belonging to the preset contact set, after sending the English message to the server.

14. A non-volatile computer-readable storage medium, being configured to store computer programs for electronic data interchange, wherein the computer programs are operable with a computer to perform the follows:
determining the number of words in a first language in a message display window of a first chat interface of a first application;
running a second application in the background based on a determination that the number determined is greater than a preset number threshold;
translating a second message in a second language in a message entry window of the first chat interface into a first message in the first language through the second application running in the background, when the second message is detected; and
sending the first message to a server when detecting a user operation for acknowledgment of the sending of the first message.

15. The non-volatile computer-readable storage medium of claim 14, wherein the translating a second message in a second language in a message entry window of the first chat interface into a first message in the first language comprises:
reading the second message in the message entry window via the second application;
translating the second message into the first message via the second application; and
providing the first message to the first application, so as to switch displaying in the message entry window from the second message to the first message.
